## Europäisches Patentamt

## European Patent Office

## Office européen des brevets

(11) Veröffentlichungsnummer: **0 265 905**

**A2**

# (12) EUROPÄISCHE PATENTANMELDUNG

(21) Anmeldenummer: **87115763.2**

(22) Anmeldetag: **27.10.87**

(51) Int. Cl.⁴: **G06F 12/06**

(30) Priorität: **27.10.86 DE 3636511**

(43) Veröffentlichungstag der Anmeldung:
**04.05.88 Patentblatt 88/18**

(84) Benannte Vertragsstaaten:
**AT BE CH DE ES FR GB GR IT LI LU NL SE**

(71) Anmelder: **Weiss, Dieter, Dr.**
**Talstrasse 136**
**D-6905 Schriesheim(DE)**

(72) Erfinder: **Weiss, Dieter, Dr.**
**Talstrasse 136**
**D-6905 Schriesheim(DE)**

(74) Vertreter: **Geyer, Ulrich F., Dr. Dipl.-Phys. et al**
**WAGNER & GEYER Patentanwälte**
**Gewuerzmuehlstrasse 5 Postfach 246**
**D-8000 München 22(DE)**

(54) **Einrichtung zum Adressieren von Baugruppen.**

(57) Bei der Einrichtung zum Ansteuern von Rechner-Baugruppen durch eine Zentraleinheit und zur Versorgung mit Informationen von anderen Baugruppen werden Adressierungsleitungen nicht als durchgehende leitungen parallel an alle Baugruppen, sondern von einer Zentraleinheit ausgehend in einer Kette hintereinander und Seriell von Baugruppe zu Baugruppe geführt. Die an einer Baugruppe über die Adressenleitungen zugeführte Adresseninformation wird in einer Adresseninformations-Änderungsschaltung der jeweiligen Baugruppe verändert und der nächsten Baugruppe weitergegeben. Auf diese Weise verfügt jede Baugruppe über eine andere Adresseninformation, und nur die Baugruppe wird selektiert, die eine für alle Baugruppen einheitlich festgelegte, gleiche Adresseninformation empfängt. Die Adressiervorrichtung ist insbesondere im Zusammenhang mit Prozeßrechner-Systemen unter Verwendung von steckbaren Baugruppen vorteilhaft, wobei keine speziellen Bus-Baugruppen erforderlich sind.

EP 0 265 905 A2

## Einrichtung zum Adressieren von Baugruppen

Die Erfindung betrifft eine Einrichtung zum Adressieren von Baugruppen durch eine Zentraleinheit.

Ein Rechnersystem weist normalerweise eine Zentraleinheit, Speichereinheiten und Periphereinheiten verschiedenster Art auf, die untereinander in Verbindung stehen und von der Zentraleinheit gesteuert werden. Derartige Rechnersysteme, insbesondere solche, die zur Steuerung von Maschinen und Anlagen als Prozeßrechner eingesetzt werden, sind heutzutage vielfach modular aufgebaut, so daß die einzelnen Einheiten als Zentral-, Speicher-, Peripher-und sonstige Module ausgebildet sind. Zur Steuerung zum Datenaustausch zwischen den einzelnen Modulen ist eine dafür vorgesehene, spezielle Baugruppe erforderlich, mit denen die Module in Verbindung stehen bzw. auf die die Module aufgesteckt sind. Eine derartige Baugruppe für den Datenaustausch und die Steuerung der einzelnen Einheiten bzw. Module wird mit Bus bezeichnet. Mit Hilfe eines solchen Buses ist die Zentraleinheit bzw. der Zentralmodul in der Lage, eine Peripherieeinheit zu adressieren und ihr, gesteuert durch den Kontrollteil des Bus, Daten zu übergeben bzw. abzuverlangen. Um eine bestimmte Einheit oder Baugruppe zu diesem Zwecke selektieren oder auswählen zu können, sendet die Zentraleinheit eine Adresseninformation an alle übrigen Einheiten. Jede dieser Einheiten besitzt eine vorgegebene, fest eingestellte eigene individuelle Adresse. Die jeweilige Baugruppe nimmt dabei nur dann an einem Datenaustausch teil, wenn sie durch Vergleich mit der von der Zentraleinheit gesendeten Adresseninformation feststellt, daß diese mit der eigenen Adresse übereinstimmt. Der Nachteil hierbei ist, daß für jede Baugruppe eine individuelle Adresse vorgesehen und beispielsweise über einen Codeschalter eingegeben werden muß. Wird eine falsche Adresse eingestellt oder die vorhandene Adresse fälschlicherweise geändert, treten Fehlfunktionen auf. Darüber hinaus muß die Zentraleinheit mit jeder einzelnen übrigen Einheit verbunden sein, um bei der Adressenabfrage auf jede Baugruppe individuell zugreifen zu können.

Der Erfindung liegt daher die Aufgabe zugrunde, eine Einrichtung zu schaffen, mit der das Adressieren von Baugruppen durch eine Zentraleinheit möglich ist, ohne daß den einzelnen Baugruppen Adressen zugeordnet werden müssen.

Diese Aufgabe wird erfindungsgemäß dadurch gelöst, daß die Baugruppen jeweils einen Schaltungsteil zur Änderung einer zugeführten Adresseninformation aufweisen, die Baugruppen von einer Zentraleinheit ausgehend, jeweils seriell hintereinander, über Adressierungsleitungen einer Kette verbunden sind, die Adresseninformation nacheinander in jeder Adresseninformations-Änderungsschaltung geändert und der jeweils nachfolgenden Baugruppe die geänderte Adresseninformation bereitgestellt wird, und nur die Baugruppe adressiert wird, die eine bestimmte, für alle Baugruppen einheitlich festgelegte Adresseninformation empfängt.

Auf Grund der erfindungsgemäßen Maßnahmen ist es nicht mehr erforderlich, den einzelnen Baugruppen individuelle Adressen zuzuordnen, wie dies bei herkömmlichen Adressiereinrichtungen erforderlich war. Damit ist es nunmehr auch nicht mehr möglich, durch falsche Zuordnung bzw. falsche Einstellung oder Verstellung der individuellen Adressen der jeweiligen Baugruppen Fehladressierungen und Fehlfunktionen hervorzurufen, was bei herkömmlichen Einrichtungen in der Praxis Anlaß zu häufigen Ausfällen und Fehlsteuerungen der Systeme war. Abgesehen von der Vereinfachung des Adressiervorgans ergibt sich mit der erfindungsgemäßen Einrichtung insbesondere auch eine sicherere zuverlässigere Funktionsweise des Rechnersystems, was insbesondere im Hinblick auf die Steuerung von Maschinen und Anlagen große Bedeutung hat, da dadurch Produktionsunterbrechungen und/oder Fehlsteuerungen und damit Ausschuß vermieden werden kann.

Ein weiterer Vorteil ergibt sich durch die Tatsache, daß die Adressierungsleitungen nicht als durchgehende Leitungen zu allen Baugruppen geführt werden müssen, sondern daß diese jeweils nur zwischen benachbarten Baugruppen vorhanden sein müssen. Die Adressierung wird daher auch - schaltungsmäßig sehr vereinfacht, da nunmehr kein eigenes Bus-System für die Adressierung erforderlich ist, an dem jeweils alle Baugruppen angeschlossen sein müssen. Durch die serielle Verbindung der einzelnen Baugruppen in einer Kette ergibt sich eine einfachere und kostengünstigere Installation des Rechnersystems, wobei insbesondere auch die Anpaßbarkeit und Flexibilität des Systems erhöht ist.

Gemäß einer Weiterbildung der Erfindung sind unterschiedliche Baugruppen in wenigstens zwei, jeweils von der Zentraleinheit ausgehende Adressierungsketten seriell hintereinander über Adressierungsleitungen verbunden. An der Zentraleinheit können also mehrere Adressierungsketten angeschlossen sein, die jeweils unterschiedliche Baugruppen umfassen; die Zentraleinheit kann also an irgendeiner Stelle im Rechnersystem angeordnet sein und von ihr können Adressierungsketten, bildlich gesprochen, sternförmig ausgehen.

Zusätzlich oder alternativ ist es gemäß einer weiteren Ausführungsform der Erfindung möglich, daß dieselben Baugruppen in wenigstens zwei von der Zentraleinheit ausgehenden Adressierungsketten jeweils seriell hintereinander über Adressierungsleitungen verbunden sind, so daß die einzelnen Baugruppen über verschiedene Adressierungsketten adressiert werden oder Informationen zugeführt erhalten können.

Gemäß einer weiteren Ausführungsform der Erfindung wird eine Teilmenge der Baugruppen in wenigstens einer Adressierkette seriell hintereinander verbunden, und eine andere Teilmenge von Baugruppen wird von der Zentraleinheit jeweils direkt über eine Bus-Leitung adressiert. Die erfindungsgemäße Einrichtung kann also vorteilhafterweise auch mit herkömmlichen Bus-Systemen kombinert werden. Dies hat den Vorteil, daß bereits installierte, vorhandene Bus-Systeme auf einfache Weise mit der erfindungsgemäßen Einrichtung erweitert werden kann, ohne daß das gesamte Bus-System ausgewechselt werden muß. Dies ist insbesondere im Hinblick auf die Kompatibilität und Erweiterungsmöglichkeit bereits installierter Systme vorteilhaft. Bei bestimmten Anwendungsfällen ist es weiterhin vorteilhaft nur einige der Adressierungsleitungen in einer Adressierungskette und die andere in einen Bus-System anzuordnen. Die Kombination der erfindungsgemäßen Einrichtung mit herkömmlichen Bus-Systemen ist auch in dieser Hinsicht gegeben, wenn dies für besondere Anwendungsfälle vorteilhaft ist.

Wie im weiteren noch ausgeführt werden wird, bestehen vielfältige Möglichkeiten, die Adresseninformations-Änderungsschaltung zu wählen. Gemäß einem Aspekt der Erfindung ist es jedoch besonders vorteilhaft, als Adresseninformations-Änderungsschaltung jeweils binäre Volladdierer vorzusehen, die besonders einfach sind.

Eine weitere vorteilhafte Ausgestaltung der Erfindung besteht darin, daß der binäre Volladdierer an eine für alle Baugruppen einheitlich vorgegebene Zahl von der ihm zugeleiteten Adresse subtrahiert oder addiert. Wird dabei eine bestimmte, ebenfalls für alle Baugruppen einheitlich festgelegte Zahl erreicht, so ist diese Baugruppe adressiert bzw. selektiert.

Eine sehr vorteilhafte und einfache Ausführungsform der erfindungsgemäßen Einrichtung besteht darin, daß eine Baugruppe dann adressiert bzw. selektiert wird, wenn die Adresseninformations-Änderungsschaltung dieser Baugruppe einen Übertrags-Bit, auch als Carry-Bit bezeichnet, erzeugt.

Die erfindungsgemäße Einrichtung ist im wesentlichen für alle denkbaren Rechnersysteme mit Vorteil anwendbar. Besonders vorteilhaft ist die erfindungsgemäße Einrichtung jedoch im Zusammenhang mit einem modularen Aufbau eines Rechnersystems, wie dies beispielsweise für Prozeßrechner zur Steuerung von Maschinen und Anlagen angestrebt wird. Insbesondere im Zusammenhang mit derartigen Prozeßrechnern ist die Weiterbildung der erfindungsgemäßen Einrichtung besonders vorteilhaft, bei der die Baugruppen jeweils sowohl Eingänge als auch Ausgänge für die Daten-, Steuer-und Dadressenleitungen aufweisen, die Eingänge nur der ersten von mehreren Baugruppen mit Daten-, Steuer-und Adressenausgängen der Zentraleinheit verbunden sind, und die jeweiligen Eingänge der jeweils nachfolgenden Baugruppe mit den Ausgängen der vorausgegangenen Baugruppen seriell verbunden sind.

Der Vorteil hierbei ist durch die Tatsache besonders augenfällig, daß keine spezielle Baugruppe für den Datenaustausch wie bei herkömmlichen Einrichtungen, also kein spezielles Bus-System erforderlich ist, das fest installiert sein muß, und an das die einzelnen Baugruppen oder Module einzeln angeschlossen werden müssen. Die Daten-, Steuer-und Adressenleitungen sind vielmehr in einzelnen Modulen integriert, so daß diese nacheinander in einer Kette miteinander verbunden werden können.

Besonders vorteilhaft ist dabei, die jeweiligen Baugruppen mit der Zentraleinheit und/oder untereinander über Steckverbindungen modulartig zu verbinden. Dadurch ergibt sich ein sehr kompaktes, einfaches Rechnersystem mit steckbaren Baugruppen, so daß das Rechnersystem auf einfachste Weise durch Zufügen oder Wegnehmen von Baugruppen oder Modulen erweitert, ergänzt bzw. verändert und an neue Aufgaben angepaßt werden kann. Dies ist umso leichter möglich, als zusätzliche Installationen, wie separate Bus-Systeme, nicht erforderlich sind.

Die Erfindung wird nachstehend anhand der Zeichnungen beispielsweise näher erläutert. Es zeigen:

Fig. 1 in schematischer Darstellung ein Rechnersystem mit herkömmlicher Bus-Adressierung,

Fig. 2 die erfindungsgemäße Einrichtung in - schematischer Darstellung und

Fig. 3 eine weitere Ausführungsform der Erfindung in schematischer Darstellung.

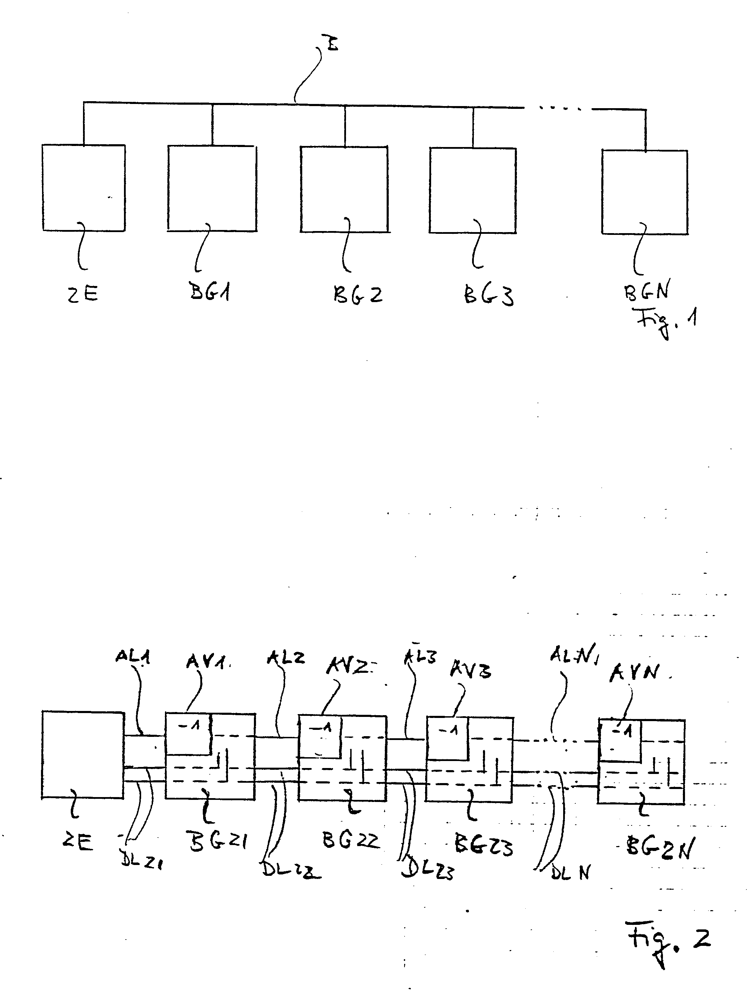

Fig. 1 zeigt eine Zentraleinheit ZE, die über eine Bus-Leitung jeweils mit Baugruppen BG1, BG2, ... BGN verbunden ist. Das heißt, jede der Baugruppen BG1, BG2, ... BGN ist mit der Zentraleinheit direkt verbunden. Zur Selektierung oder Adressierung ist es dabei erforderlich, daß jeder Baugruppe eine bestimmte Adresse, beispielsweise eine Zahl oder ein Name, individuell zugeordnet ist. Diese Adresse wird beispielsweise bei Modulen im Prozeßrechnersystem durch Codeschalter eingegeben und festgelegt. Der Zentraleinheit müssen diese Adressen ebenfalls bekannt sein, damit sie die entsprechende Zuordnung treffen kann.

Soll beispielsweise die dritte Baugruppe BG3 selektiert bzw. adressiert werden, so gibt die Zentraleinheit ZE an den Bus B die der dritten Baugruppen BG3 individuell zugeordnete Adresse ab. Diese Adresse wird in sämtlichen Baugruppen mit der jeweiligen individuellen Adresse der jewei ligen Baugruppe verglichen. Dazu muß jede Baugruppe direkt mit dem Bus bzw. mit der Zentraleinheit in Verbindung stehen. Da nur für die dritte Baugruppe BG3 der Vergleich positiv ausfällt, ist diese Baugruppe selektiert.

Der Einfachheit halber ist der Bus B in Fig. 1 durch eine einzige Verbindung bzw. Linie dargestellt, obgleich der Bus eine Vielzahl von Leitungen, nämlich Datenübertragungs-, Steuer-und Adressierleitungen umfaßt. Der Bus bildet sozusagen eine eigene Baugruppe, die fest vorgegeben ist und zusätzlich zu den übrigen Baugruppen installiert werden muß.

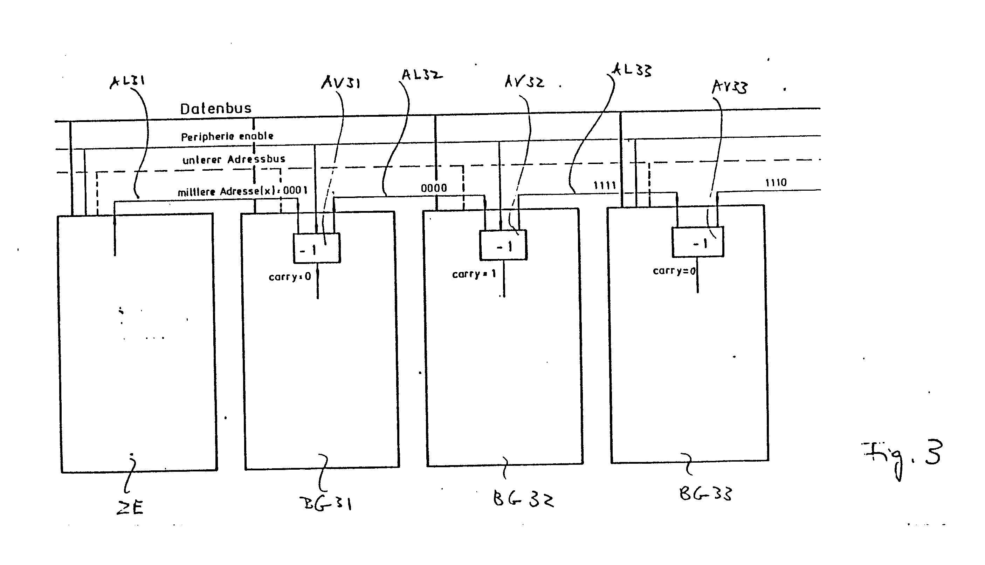

Fig. 2 zeigt eine schematische Anordnung einer Zentraleinheit ZE und weiterer Baugruppen BG21, BG22, ..., BG2N, die in der erfindungsgemäßen Weise adressiert werden. Jede Baugruppe BG21, BG22, ..., BG2N enthält eine Adresseninformations-Änderungsschaltung AV1, AV2, ..., AVN. Die Adresseninformations-Änderungsschaltung AV1 der ersten Baugruppe BG21 ist über eine Adressenleitung AL1 mit der Zentraleinheit verbunden. Eine Ausgangsleitung der Adresseninformations-Änderungsschaltung AV1 führt (strichliniert dargestellt) zum Ausgang der ersten Baugruppe BG21 und über eine Adressenleitung AL2 an den Eingang einer weiteren Adresseninformations-Änderungsschaltung AV2, die sich in der zweiten Baugruppe BG22 befindet. In entsprechender Weise sind die Adresseninformations-Änderungsschaltungen AVN der jeweiligen Baugruppen BG2N mit den jeweiligen Adresseninformations-Änderungsschaltungen AV(N-1) in der jeweiligen vorangehenden Baugruppe (2N-1) über Adressenleitungen ALN verbunden

Nachfolgend wird die Funktionsweise der erfindungsgemaßen Einrichtung beispielsweise erläutert. Angenommen, es soll die dritte Baugruppe 23 adressiert bzw. selektiert werden. Die Zentraleinheit ZE gibt über die Adressenleitung 1 beispielsweise die Zahl 3 ab, die in der Adresseninformations-Änderungsschaltung AV1 der ersten Baugruppe 21, die beispielsweise eine Subtrahierschaltung ist, um 1 vermindert wird, so daß über die Adressenleitung 2 das der Zahl 2 entsprechende Signal an die Adresseninformations-Änderungsschaltung AV2 der zweiten Baugruppe 22 gelangt. Hier wird die Zahl 2 wiederum um 1 vermindert. Die Zahl 1 gelangt über die Adressenleitung 3 dann zur Adresseninformations-Änderungsschaltung AV3 der dritten Baugruppe 23. Hier wird das Adressensignal wiederum um 1 vermindert, was dann zum Signal Null führt, das über die Leitung AL4 zur vierten Baugruppe BG24 geleitet wird, in deren Adresseninformations-Änderungsschaltung AV4 wiederum eine Verminderung um 1 stattfindet, so daß das Adressenausgangssignal der vierten Baugruppe 24 dann -1 ist. Dieser Vorgang geht entsprechend weiter.

Ist nun die bestimmte, für alle Baugruppen einheitlich festgelegte Adresseninformation der Wert Null, so entspricht dieser dem Signal, das die Adresseninformations-Änderungsschaltung AV3 in der dritten Baugruppe 23 erzeugt. Damit ist diese Baugruppe selektiert bzw. adressiert und ausgewählt, Daten zu empfangen oder abzugeben.

Ersichtlich ist es mit der erfindungsgemäßen Einrichtung nicht mehr erforderlich, die einzelnen Baugruppen parallel, d. h. über einen gemeinsamen Bus anzusteuern, da die einzelnen Adresseninformatione von den jeweiligen Baugruppen abgeändert werden und es dadurch möglich ist, die Baugruppen nicht mehr parallel an eine einzige Bus-Leitung zu legen, sondern seriell hintereinander in einer Kette zu verbinden.

In Fig. 2 sind weiterhin Daten-und Steuerleitungen DL21, DI22, ... DLN vorgesehen, über die die Daten-und Steuer informationen übertragen werden. Auch hier werden die Daten-und Steuerleitungen DL21, DL22, ... DLN, wie die Adressenleitungen AL1, AL2, ..., ALN mit den jeweiligen Baugruppen BG21, BG22, ..., BGN seriell, d. h. in einer Kette verbunden. Die jeweiligen Daten-und Steuerleitungen laufen durch die einzelnen Baugruppen oder Module hindurch, was durch strichlinierte Leitungen angedeutet ist und haben in den einzelnen Baugruppen jeweils Zugriffsleitungen.

In Fig. 3 ist eine weitere Ausführungsform der Erfindung schematisch dargestellt. Die als Zentralmodul vorliegende Zentraleinheit ist über eine Adressenleitung AL31 wiederum mit einer Adresseninformations-Änderungsschaltung AV31 einer in der Verbindungskette ersten Baugruppe 31 verbunden. In entsprechender Weise schließen sich über Adressenleitungen AL32 und AL33 weitere Baugruppen BG32 und BG33 and, die jeweils ebenfalls Adressensinformations-Änderungsschaltungen AV32 bzw. AV33 enthalten.

Die Baugruppen BG31, BG32 und BG33 sind beispielsweise Peripherie-Module oder Speichermodule.

Weiterhin sind entsprechend den Daten-und Steuerleitungen DL21, DL22, ..., DLN von Fig. 2 ebenfalls Daten-und Steuerleitungen dargestellt, der besseren Übersicht halber jedoch nicht zwischen den einzelnen Modulen, sondern im oberen Teil von Fig. 3. Die Leitungen bestehen aus einem Daten-Bus, einer Peripherie-Enable-Leitung und einem unteren Adressen-Bus.

Jeder der Baugruppen bzw. Peripherie-Module 31, 32, 33 wird über den unteren Adressen-Bus in einem Adreßbereich von 16 Byts angesprochen. Der Adreßbereich besteht aus einem oberen Adreßbereich F F, der durch Peripherie-Enable codiert wird, einem unteren Adreßbereich Y, das ist der Adressierungsbereich eines Moduls, sowie einem mittleren Adreß bereich X, der gemäß der Erfindung decodiert ist. Die oberen zwei Bytes der Adresse FFXY (Hex) sind vordecodiert. Wenn die Zentraleinheit in diesem vordecodierten Bereich adressiert, wird die Peripherie-Enable-Leitung aktiviert. Erst danach wird die eigentliche Adressenauswahl bei dieser Ausführungsform folgendermaßen vorgenommen:

Jede der Peripherie-Baugruppen BG31, BG32 und BG33 verfügt über einen Volladdierer. Die ankommende hexadezimale Adresse, die 4-Bit-binär codiert ist, wird um die Zahl 1 erniedrigt, bzw. der Komplementär-Binärwert F wird addiert und an die sich rechts anschließende Baugruppe 32 weitergegeben. Werden nicht mehr als 16 Peripherie-Baugruppen angeschlossen, so wird höchstens bei einem Modul das Übertrag-bzw. Carry-Bit des Addierers gesetzt. Dieses Modul ist dann angewählt. Da das Modul "Feld-adressiert" ist, kann es in einem Adreßbereich von 16 Bytes angesprochen werden.

Dem Fachmann sind zahlreiche Abwandlungen und Ausgestaltungen der Erfindung möglich, ohne daß dadurch der Erfindungsgedanke verlassen wird. Wie bereits erwähnt, ist es auch möglich, von der Zentraleinheit mehrere Baugruppenketten zu verbinden und/oder die seriell hintereinander geschalteten Baugruppen mit wenigstens zwei Adressierungsketten zu verbinden, wodurch über verschiedene Adressierungsleitungen auf die Baugruppen zugegriffen werden kann. Sehr vorteilhaft ist auch die Verbindung der einzelnen hintereinander geschalteten, seriell verbundenen Baugruppen über Stecker; d. h., die einzelnen Baugruppen sind steckbar und können auf einfache Weise beliebig zusammengesetzt werden, was insbesondere bei Prozeßrechner mit modularem Aufbau zur Steuerung von Maschinen und Anlagen von großem Vorteil ist. Dabei ist eine zusätzliche, spezielle Baugruppe für den Datenaustausch, also ein Bus-System, nicht mehr erforderlich.

## Ansprüche

1. Einrichtung zum Adressieren von Baugruppen durch eine Zentraleinheit, dadurch **gekennzeichnet,** daß
-die Baugruppen (BG21, BG11, ... BG2N; BG31, BG32, BG33) jeweils einen Schaltungsteil (AV1, AV2,..., AVN; AV31, AV32, AV33) zur Änderung einer zugeführten Adresseninformation aufweisen,
-die Baugruppen (BG21, BG22, ..., BG2N; BG31, BG32, BG33), von einer Zentraleinheit (ZE) ausgehend, jeweils seriell hintereinander über Adressierungsleitungen (AL1, AL2, ..., ALN; AL31, AL32, AL33) in einer Kette verbunden sind,
-die Adresseninformation nacheinander in jeder Adresseninformations-Änderungsschaltung (AV1, AV2,..., AVN; AV31, AV32, AV33) geändert und der jeweils nachfolgenden Baugruppe (BG22, BG22, ..., BG2N; BG32, BG33) die geänderte Adresseninformation bereitgestellt wird, und
-nur die Baugruppe (BG21, BG22, ..., BG2N; BG31, BG32, BG33) adressiert wird, die eine bestimmte für alle Baugruppen einheitlich festgelegte Adresseninformation empfängt.

2. Einrichtung nach Anspruch 1, dadurch gekennzeichnet, daß unterschiedliche Baugruppen in wenigstens zwei, jeweils von der Zentraleinheit (ZE) ausgehenden Adressierungsketten jeweils seriell hintereinander über Adressierungsleitungen verbunden sind.

3. Einrichtung nach Anspruch 1 oder 2, dadurch gekennzeichnet, daß dieselben Baugruppen in wenigstens zwei von der Zentraleinheit (ZE) ausgehenden Adressierketten jeweils seriell hintereinander mit Adressierungsleitungen verbunden sind.

4. Einrichtung nach einem der Ansprüche 1 bis 3, dadurch gekennzeichnet, daß eine Teilmenge der Baugruppen in einer Adressierungskette seriell hintereinander verbunden sind und eine andere Teilmenge von Baugruppen von der Zentraleinheit jeweils direkt über eine Busleitung adressiert wird.

5. Einrichtung nach einem der Ansprüche 1 bis 4, dadurch gekennzeichnet, daß einige der Adressierungsleitungen in einer Adressierungskette, die übrigen in einem Bussystem angeordnet sind.

6. Einrichtung nach einem der Ansprüche 1 bis 5, dadurch gekennzeichnet, daß die Adresseninformations-Änderungs schaltungen (AV31, AV32, AV33) jeweils binäre Volladdierer sind (Fig. 3).

7. Einrichtung nach Anspruch 6, dadurch gekennzeichnet, daß der binäre Volladdierer (AV31, AV32, AV33) eine für alle Baugruppen (BG31, BG32, BG33) einheitlich vorgegebene Zahl von der ihm zugeleiteten Adresse subtrahiert oder addiert (Fig. 3).

8. Einrichtung nach Anspruch 6 oder 7, dadurch gekennzeichnet, daß eine Baugruppe (BG32) selektiert wird, wenn die Adresseninformations-Änderungsschaltung (AV32) dieser Baugruppe (BG32) einen Übertrag-Bit erzeugt (Fig. 3).

9. Einrichtung nach einem der Ansprüche 1 bis 8, dadurch gekennzeichnet, daß
-die Baugruppen jeweils sowohl Eingänge als auch Ausgänge für die Daten-, Steuer-und Adressenleitungen (DL21, DL22, ..., DLN; AL1, AL2, ..., A1N) aufweisen,
-die Eingänge nur der ersten (BG21) von mehreren Baugruppen (BG21, BG22, ..., BG2N) mit Daten-, Steuer-und Adressenausgängen der Zentraleinheit (ZE) verbunden sind, und
- die jeweiligen Eingänge der jeweils nachfolgenden Baugruppe (BG22, BG23, ..., BG2N) mit den Ausgängen der vorausgegangenen Baugruppen (BG21, BG22, ..., BG2(N-1)) seriell verbunden sind.

10. Einrichtung nach Anspruch 9, dadurch gekennzeichnet, daß die jeweiligen Baugruppen (BG21, BG22, ... BG2N) mit der Zentraleinheit (ZE) und/oder untereinander in einer Kette über Steckverbindungen modulartig verbunden sind.

E

ZE  BG1  BG2  BG3  BGN

Fig. 1

AL1  AV1.  AL2  AV2.  AL3  AV3  ALN1  AYN.

−1  −1  −1  −1

ZE  BGZ1  BGZ2  BGZ3  BGZN

DLZ1  DLZ2  DLZ3  DLN

Fig. 2

Fig. 3

AL31  AV31  AL32  AV32  AL33  AV33

Datenbus

Peripherie enable

unterer Adressbus

mittlere Adresse(x)=0001    0000    1111    1110

−1    carry=0

−1    carry=1

−1    carry=0

ZE    BG31    BG32    BG33

0 265 905